Europäisches Patentamt

European Patent Office

Office européen des brevets

(11) Veröffentlichungsnummer: **0 476 347 A2**

# (12) EUROPÄISCHE PATENTANMELDUNG

(21) Anmeldenummer: **91114114.1**

(22) Anmeldetag: **22.08.91**

(51) Int. Cl.5: **G02F 1/37**, G02B 6/12

(30) Priorität: **20.09.90 DE 4029853**

(43) Veröffentlichungstag der Anmeldung:
**25.03.92 Patentblatt 92/13**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Deserno, Ulrich, Dr.**
**Augustenstrasse 121**
**W-8000 München 40(DE)**
Erfinder: **Metzger, Wilhelm, Dr.**
**Maistrasse 52**
**W-8000 München 2(DE)**
Erfinder: **Storck, Eckhard, Dr.**
**Argelrieder Strasse 27**
**W-8000 München 71(DE)**

(54) **Verfahren zur Herstellung einer optischen Wellenleiteranordnung für die optische Frequenzvervielfachung.**

(57) Verfahren zur Herstellung einer optischen Wellenleiteranordnung für die optische Frequenzvervielfachung, Anordnung zur optischen Frequenzvervielfachung und Anordnung mit einem relativ zu einem Substrat bewegbaren optischen Wellenleiter

Verfahren zur Herstellung einer optischen Wellenleiteranordnung mit in entgegengesetzten Richtungen gepolten Domänen für die optische Frequenzverdoppelung, wobei auf die Oberfläche eines homogenen Substrats aus ferroelektrischem Material streifenförmige Schichten aus Dotiermaterial aufgebracht und aus diesen Schichten ein Dotierstoff in das Substat eindiffundiert wird, wobei entweder die dotierten Bereiche oder das undotierte Substrat eine höhere Curie-Temperatur aufweist, wobei das Substrat bei oder über der größeren Curie-Temperatur in einem elektrischen Feld und danach bei der niedrigeren Curie-Temperatur im umgepolten elektrischen Feld erhitzt wird und wobei bei einer im Vergleich zu den beiden Curie-Temperaturen sehr niedrigen Temperatur ein optischer Wellenleiter erzeugt wird. Eine erfindungsgemäße Anordnung und eine integriert optische Anordnung mit einem beweglichen Wellenleiter sind angegeben.

FIG 1

FIG 1a

FIG 1b

FIG 1c

FIG 1d

Verfahren zur Herstellung einer optischen Wellenleiteranordnung für die optische Frequenzvervielfachung, Anordnung zur optischen Frequenzvervielfachung und Anordnung mit einem relativ zu einem Substrat bewegbaren optischen Wellenleiter

Die Erfindung betrifft nach dem Patentanspruch 1 ein Verfahren zur Herstellung einer optischen Wellenleiteranordnung mit in verschiedenen Richtungen elektrisch gepolten Domänen für die optische Frequenzvervielfachung in einem Substrat aus einem optisch nichtlinearen Material, eine Anordnung zur optischen Frequenzvervielfachung nach dem Patentanspruch 16 und eine Anordnung mit einem relativ zu einem Substrat bewegbaren optischen Wellenleiter nach Anspruch 24.

Die optische Frequenzverdoppelung findet bei Halbleiterlasern Anwendung und ist in der Literatur mit SHG (second-harmonic generation) bezeichnet. Da die Leistung von Halbleiterlasern mit 0,01 bis 1 Watt klein ist, muß die SHG-Effizienz konsequent maximiert werden. Maßgebliche Faktoren hierbei sind:

a) Es kommen nur Materialien mit hohen nichtlinearen Koeffizienten in Frage. Feldvektoren und Ausbreitungsrichtungen der am Prozeß beteiligten Lichtwellen sind so zu wählen, daß die größten Elemente des SHG-Koeffizienten-Tensors zum Tragen kommen.

b) Durch die Technik des "Phase-Matching", im folgenden mit PM bezeichnet (siehe z. B. F. Zernike: Applied Nonlinear Optics, Wiley 1977), wird beispielsweise optimale Energieeinspeisung in die Oberwelle erreicht. PM wird z.B. dadurch erreicht, daß die unvermeidliche Brechzahldispersion zwischen Grund- und Oberwelle gerade durch die Doppelbrechung (optische Anisotropie) kompensiert wird.

Die optimalen Richtungen nach Kriterium a) und Kriterium b) fallen in der Regel nicht zusammen. Die notwendigen Kompromisse gehen auf Kosten der SHG-Effizienz.

c) Wenn Grund- und Oberwellen in einem Wellenleiter aus optisch nichtlinearem Material geführt sind, wird vermieden, daß die fokussierte Lichtwelle durch Beugung divergiert. Vielmehr bleibt die hohe wirksame Feldstärke des fokussierten Lichtes über eine große Wechselwirkungslänge erhalten. Für einen vorgegebenen Fokusquerschnitt erhöht sich im Idealfall die Leistung des frequenzverdoppelten Lichts quadratisch mit der wirksamen Länge des Wellenleiters bezogen auf die Länge des Freistahl-Fokus. Die speziellen Möglichkeiten und Probleme der Wellenleiter SHG (PM mit Modendispersion, Modenfeldüberlagerung) werden z.B. in Stegemann: Nonlinear Integrated Optics, J. Appl. Phys. 58 - (1982), S. R57-R78 ausführlich behandelt.

Die nichtlinearen Koeffizienten guter gebräuchlicher SHG-Materialien sind beispielsweise
$LiNbO_3$, $d_{31}$:6pm/V
$LiNbO_3$, $d_{33}$:50 pm/V
$KNbO_3$, $d_{32}$:15 pm/V
MNA(organisches Material) $d_{11}$:160pm/V.

Normales PM mit Doppelbrechung ist bei $LiNbO_3$ nur für den relativ kleinen Koeffizienten $d_{31}$ möglich, die kürzestes dabei erreichbare Wellenlänge beträgt etwa 500 nm, während der Transmissionsbereich des Materials bis etwa 400 nm reicht.

Es wurde bereits in den 60iger Jahren vorgeschlagen, anstelle des normalen PM eine Quasi-Phase-Matching-Technik (QPM) einzusetzen (siehe beispielsweise F. Zernike: Applied Nonlinear Optics, Wiley 1977; Bloembergen: Phys. REv. 127 - (1962) S. 1918; US-Patent 3 384 433). Zum Verständnis dieses SHG-Verfahrens brachte man die das nichtlineare Material durchlaufende Grundwelle einer Frequenz $\omega$, die phasenstarr an die Grundwelle gekoppelte harmonische Ladungsverschiebungs-Welle (HLW-Komponente mit der Frequenz $2\omega$) sowie die von der Ladungsverschiebungswelle angeregte freilaufende Oberwelle der Frequenz $2\omega$. Bei normaler Dispersion läuft die Oberwelle etwas langsamer als die Grundwelle und die HLW.

Bei normalem PM werden die Ausbreitungsgeschwindigkeiten und damit die Brechzahlen für Grund- und Oberwelle exakt gleichgemacht. Beim QPM läßt man zunächst durch die unterschiedlichen Geschwindigkeiten eine Phasendifferenz zwischen der HLW- und der Oberwelle entstehen. Nach Durchlaufen einer bestimmten Länge $1_c$ erreicht die Phasendifferenz den Wert $\pi$. Diese Phasenverschiebung verhindert, daß weitere Energie von der HLW in die Oberwelle eingespeist wird. Der Kunstgriff besteht nun darin, gerade am Ort $1_c$ die HLW umzupolen. Das entspricht einer Rückstellung der Phase um die störende Differenz $\pi$, wodurch der Anfangszustand wieder hergestellt ist. Die HLW im anschließenden Längenintervall trägt somit wieder phasenrichtig zum Aufbau der Oberwelle bei. Für eine Vielzahl von Längenintervallen gesehen, resultiert eine kontinuierlich anwachsende Oberwelle. Die lokale Phasendifferenz bleibt immer zwischen 0 und $\pi$. Wegen der endlichen Phasendifferenz, deren Mittelwert bei $\pi/2$ ist das abgestrahlte harmonische Feld um den Faktor $2/\pi$ = 0,64 kleiner als im Fall von normalem PM mit exakt verschwindender Phasendifferenz. Im allgemeinen wird diese Effizienzverminderung beim QPM mehr als ausgeglichen durch den Wegfall der bei normalem PM bestehenden Einschränkung hinsichtlich Richtung und Frequenz der beteiligten Wellen.

In der Praxis wurde QPM an $LiNbO_3$-Bulk-Kristallen demonstriert, die in Form von periodischen, antiparallel gepolten ferroelektrischen Domänen strukturiert waren (siehe beispielsweise D. Feng et al: Appl. Phys. Lett. 37 (1980) S. 607; A. Feist, P. Koidl: Appl. Phys. Lett. 47 (1985) S. 1125 und Xue et al: Chinese Physics, Vol. 4 (1984) S. 555). Die Domänendicke h war hier etwa 4 $\mu$m. Es konnte hierbei der größere nicht lineare Koeffizient $d_{33}$ über mehrere hundert Domänen mit einer Gesamtlänge von etwa 1 mm genutzt und die SHG-Effizienz 17-fach gegenüber einem unstrukierten Kristall gleicher Länge mit $d_{31}$-PM verbessert werden.

In ähnlichen SHG-Versuchen mit QPM-LiNbO₃ soll in Stanford (USA) auch der bei 420 nm liegende blaue Spektralbereich zugänglich gemacht worden sein (siehe Magel et al: Tagungsvortrag THQ3, CLEO, 1989, Baltimore).

Von Somekh und Yariv gibt es Vorschläge für Wellenleiter-SHG mit QPM durch künstliche periodische Strukturen, z.B. wellenförmige Deformationen der Wellenleiteroberfläche (siehe Somekh: Appl. Phys. Lett. 21 (1972) S. 140) oder periodische Modulation der nichtlinearen Koeffizienten des Wellenleitermaterials zwischen 0 und einem Maximalwert (siehe Somekh: Opt. Comm. 6 (1972) S. 301). In dieser letztgenannten Literaturstelle wird ein Realisierungsvorschlag für Schichtwellenleiter gemacht.

Es wurden auch auf der Oberfläche von LiNbO₃-Wafern Domänen erzeugt (siehe Lim et al: Tagungsvortrag THQ4, CLEO, 1989, Baltimore). Anschließend wurde durch Protonenaustausch ein planarer Wellenleiter auf diesem Wafer erzeugt und daran QPM-SHG für 1064 nm demonstriert.

Den Vorteilen der QPM-Technik stehen die Schwierigkeiten bei der Herstellung der periodisch alternierend elektrisch gepolten Domänen gegenüber. Diese Schwierigkeiten bestehen im wesentlichen darin, daß die Herstellung dieser periodisch alternierend gepolten Domänen mit der notwendigen Präzision von etwa 1 $\mu$m in der Praxis nur teilweise gelungen ist.

Aufgabe der Erfindung ist es, ein Verfahren der eingangs genannten Art anzugeben, bei dem die für QPM-SHG geeignete optische Wellenleiteranordnung mit besserer Strukturqualität, insbesondere mit der nötigen Feinheit und Präzision herstellbar ist.

Diese Aufgabe wird durch die im Patentanspruch 1 angegebenen Merkmale gelöst.

Ein Vorteil des erfindungsgemäßen Verfahrens liegt darin, daß die zur Erzeugung kurzwelligen (blauen) Lichts bei 1 bis 3 $\mu$m liegenden Strukturbreiten $l_c$ über der gesamten SHG-Struktur mit einer typischen Dimension von 1 bis 4 $\mu$m auf Bruchteile von $l_c$ d.h. etwa auf 0,5 $\mu$m eingehalten werden können.

Ein wesentliches Merkmal des erfindungsgemäßen Verfahrens besteht darin, daß anstelle laminierter Substrate (siehe D. Feng et al: Appl. Phys. Lett. 37 (1980) S. 607) ein Substrat verwendet wird, das homogen aus dem ferromagnetischen optisch nichtlinearen Material besteht.

So kann bei dem erfindungsgemäßen Verfahren das Substrat aus reinem LiNbO₃, reinem BaTiO₄ oder reinem PbTiO₄ bestehen (Anspruch 2). Vorzugsweise besteht das Substrat aus LiNbO₃ (Anspruch 3).

Als Dotierstoffe werden vorzugsweise farblose Ionenbildner (Anspruch 4) wie Ti, Y, Zr, La sowie Mg, Ca, Sr, Ba und auch Lithium verwendet (Anspruch 5).

Der optische Wellenleiter kann u.a. als ein in das Substrat dotierter optischer Wellenleiter hergestellt werden. Dabei ist es zweckmäßig, den optischen Wellenleiter in Form eines dotierten Wellenleiters bei einer im Vergleich zu den beiden Curie-Temperaturen des Substrats und der dotierten Bereiche sehr kleinen Temperatur im Substrat herzustellen (Anspruch 6), weil dabei vermieden wird, daß sich Domänen verschieben oder umpolen. Geeignet dafür ist die Herstellung des dotierten Wellenleiters durch Protonenaustausch und/oder Ionenimplantation (Anspruch 7).

Wünschenswert sind nebeneinander verlaufende streifenförmige Domänen mit periodisch alternierend gepolten Domänen. Dies kann auf einfache Weise dadurch erreicht werden, daß durch Verwendung streifenförmiger Schichten aus Dotiermaterial mit Abstand nebeneinander verlaufende streifenförmige dotierte Bereiche im Substrat hergestellt werden (Anspruch 8).

Der optische Wellenleiter wird vorzugsweise in Form mindestens eines in Richtung der Reihe der dotierten Bereiche im Substrat verlaufenden Streifenwellenleiter hergestellt (Anspruch 9).

Eine bevorzugte Anordnung zur optischen Frequenzvervielfachung mit einem oder mehreren optischen Wellenleitern mit abwechselnd in entgegengesetzten Richtungen elektrisch gepolten Domänen auf einem Substrat ist so ausgebildet, daß die Domänen durch nebeneinader verlaufende streifenförmgie Bereiche an der Oberfläche des Substrats, in denen von streifenförmigen Bereich zu streifenförmigem Bereich das Material des Substrats abwechselnd in entgegengesetzten Richtungen gepolt ist, definiert sind, und daß der optische Wellenleiter ein oder mehrere Streifenwellenleiter sind, welche die streifenförmigen Bereiche kreuzen. Diese bevorzugte Anordnung kann durch Kombination des Verfahrens nach Anspruch 8 mit den Verfahren nach Anspruch 9 auf einfache Weise hergestellt werden.

Sind die die Domänen definierenden streifenförmigen Bereiche mit einer bestimmten Streifenbreite hergestellt, gibt es eine bestimmte Betriebstemperatur und eine bestimmte Betriebswellenlänge, bei welcherdie Anordnung zu betreiben ist. Weichen die Betriebstemperatur und/oder die Betriebswellenlänge von diesen bestimmten Werten ab, müßte ein Feinabgleich der Breiten der streifenförmigen Bereich vorgenommen werden, der aber bei einer Anordnung mit festgelegter Breite der streifenförmigen Bereiche nicht möglich ist.

Die Erfindung zeigt einen Weg auf, wie dennoch ein Feinabgleich der Breite der streifenförmigen Bereiche und damit der Domänen bei vom Sollwert abweichenden Betriebstemperaturen und/oder Wellenlängen möglich ist.

Dazu wird vorteilhafterweise die Anordnung nach Anspruch 16 so ausgebildet, daß die parallel zueinander verlaufenden streifenförmigen Bereiche jeweils eine konstante Breite aufweisen und von mehreren Streifenwellenleitern unter verschiedenen Winkeln gekreuzt werden (Anspruch 17), wobei es vorteilhaft ist, wenn die mehreren Streifenwellenleiter zusammenlaufen und sich vereinigen (Anspruch 18), oder so ausgebildet ist, daß die streifenförmigen Bereiche jeweils eine variierende Breite aufweisen und von mehreren parallelen Streifenwellenleitern gekreuzt werden (Anspruch 19), wobei es vorteilhaft ist, wenn die streifenförmigen Bereiche zusammen- oder auseinanderlaufen (Anspruch 20), oder wenn die Anordnung nach Anspruch 16 durch einen relativ zum Substrat bewegbaren Streifenwellenleiter gekennzeichnet ist (Anspruch 21), wobei eine vorteilhafte Anordnung dieser Art darin besteht, daß die parallel zueinander verlaufenden streifenförmigen Bereiche jeweils eine konstante Breite aufweisen und der bewegbare Streifenwellenleiter relativ zum Substrat verschwenkbar ist (Anspruch 22), eine andere darin, daß die streifenförmigen Bereiche jeweils eine variierende Breite aufweisen und der bewegbare Streifenwellenleiter in sich selbst parallel relativ zum Substrat verschiebbar ist (Anspruch 23).

Die Anordnungen nach den Ansprüchen 17 bis 20 lassen sich der Reihe nach durch die Verfahren nach den Ansprüchen 10 bis 13 auf einfache Weise herstellen. Ebenso lassen sich die Anordnungen nach den Ansprüchen 21 bis 23 in Bezug auf die herzustellenden dotierten Bereiche und mit Ausnahme der Herstellung des beweglichen Streifenwellenleiters auf einfache Weise durch diese Verfahren nach den Ansprüchen 10 bis 13 herstellen.

Durch die Erfindung ist erstmals auch eine integriert optische Anordnung auf einem Substrat mit einem relativ zum Substrat bewegbaren optischen Wellenleiter bereitgestellt (Anspruch 24), wobei insbesondere die Anordnungen nach den Ansprüchen 21 bis 23 derartige integriert optische Anordnungen sind.

Bevorzugte und vorteilhafte Ausgestaltungen der integriert optischen Anordnung nach Anspruch 24 gehen aus den Ansprüchen 25 bis 28 hervor.

Die Erfindung wird anhand der Figuren in der nachfolgenden Beschreibung beispielhaft näher erläutert. Es zeigen:

Figuren 1a bis 1d
im Querschnitt einzelne Verfahrensstufen bei der Herstellung einer erfindungsgemäßen Anordnung,

Figur 2
eine Draufsicht auf eine erfindungsgemäße Anordnung mit parallelen streifenförmigen, periodisch abwechselnd gepolten Domänen konstanter Breite und mit mehreren Streifenwellenleitern 15, welche die streifenförmigen Domänen unter verschiedenen Kreuzungswinkeln schneiden sowie zusammenlaufen und sich vereinigen, und

Figur 3
eine Draufsicht auf eine erfindungsgemäße Anordnung mit unter verschiedenen Winkeln schräg zueinander verlaufenden streifenförmigen, periodisch abwechselnd gepolten Domänen variierender Breite und mehreren parallelen, diese Domänen kreuzenden Streifenwellenleiter,

Figur 4
einen Querschnitt durch eine erfindungsgemäße integriert optische Anordnung mit einem beweglichen optischen Wellenleiter, der durch eine Flüssigkeit in einer Nut eines relativ zu einem Substrat beweglichen Körpers definiert ist, und

Figur 5
einen Querschnitt durch eine integriert optische Anordnung mit einem beweglichen Wellenleiter, der durch ein Paar streifenförmiger Elektroden definiert ist, die relativ zu einem Substrat bewegbar sind.

Gemäß dem erfindungsgemäßen Verfahren werden auf die vorzugsweise polierte Oberfläche 10 des beispielsweise aus $LiNbO_3$ bestehenden Substrats 1 eine Reihe von mit Abstand d nebeneinander angeordneten streifenförmigen Bereichen 13 aus Dotiermaterial, beispielsweise Ti, mittels Photolithographie und Aufdampfen, Sputtern oder anderen Beschichtungstechniken aufgebracht.

Der oder die in den streifenförmigen Bereichen 14 enthaltenen Dotierstoffe werden durch Temperaturbehandlung unter die Oberfläche 10 in das Substrat 1 eindiffundiert, so daß streifenförmige dotierte Bereiche 14 unter der Oberfläche im Substrat entstehen, deren Längsrichtung ebenfalls senkrecht zur Zeichenebene verläuft und die eine vorgegebene Domänenbreite $1_c$ definieren, die im wesentlichen auch gleich dem Abstand zwischen den dotierten Bereichen 14 ist.

Durch diese chemische Dotierung stellt sich in den dotierten Bereichen 14 eine Curie-Temperatur $T_{c1}$ ein, die mehr oder weniger von der Curie-Temperatur $T_c$ des reinen Substratmaterials abweicht.

Die Dotierung wird nach der Maßgabe bestimmt, daß die Dotierungskonzentration einerseits nicht höher als nötig gewählt wird, um größere Änderungen der Brechzahl zu vermeiden, die eine Lichtstreuung an den Domänengrenzen zur Folge hätten, andererseits aber groß genug ist, daß eine ausreichend große prozeßtechnisch beherrschbare Differenz $|T_{c1} - T_c|$ entsteht, d.h. daß $T_{c1}$ deutlich von $T_c$ abweicht.

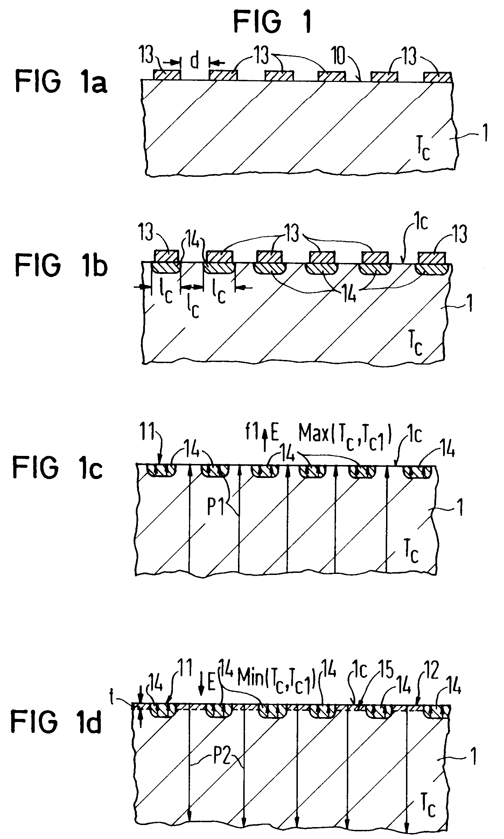

Danach wird das dotierte Substrat 1 mit den dotierten Bereichen 14 bei der größeren der beiden voneinander abweichenden Curie-Temperaturen $T_c$ und $T_{c1}$ einem in einer bestimmten Richtung ausgerichteten elektrischen Feld ferroelektrisch gepolt. Bei dem Beispiel nach Figur 1 sei ohne Beschränkung der Allgemeinheit angenommen, daß die Curie-Temperatur $T_{c1}$ der dotierten Bereiche 14 größer als die Curie-Temperatur $T_c$ des undotierten Substrats 1 ist und daß das elektrische Feld E in der Richtung r1 ausgerichtet ist, die von der Oberfläche 10 des Substrats fortweist. Das Substrats 1 und die dotierten Bereiche 14 sind dann nach Abkühlung in Richtung der Pfeile P1 permanent gepolt.

Danach wird bei der kleineren der beiden Curie-Temperaturen $T_c$ und $T_{c1}$, d.h. im Beispiel bei der Temperatur $T_c$, das Substrat 1 einem in der entgegengesetzten Richtung r2 ausgerichteten elektrischen Feld, beispielsweise der gleichen Stärke, ausgesetzt, wodurch das undotierte Substrat 1 nach Abkühlung in der durch die Pfeile P2 angedeuteten entgegengesetzten Richtung gepolt ist.

In Draufsicht auf die Oberfläche 10 sind dann unmittelbar nebeneinander verlaufende streifenförmige Domänen 11 und 12 vorhanden, bei denen die Domänen 11 durch die streifenförmigen Bereiche 14 definiert sind und in der Richtung r1 permanent polarisiert sind, während die durch die streifenförmigen Zwischenräume zwischen benachbarten dotierten Bereichen 14 definierten Domänen 12 in der Richtung r2 permanent polarisiert sind.

In dem Fall, daß $T_c$ anders als beim angenommenen Beispiel größer als $T_{c1}$ ist, würde zuerst das undotierte Substratmaterial permanent polarisiert und danach erst das dotierte Material der streifenförmigen Bereiche 14.

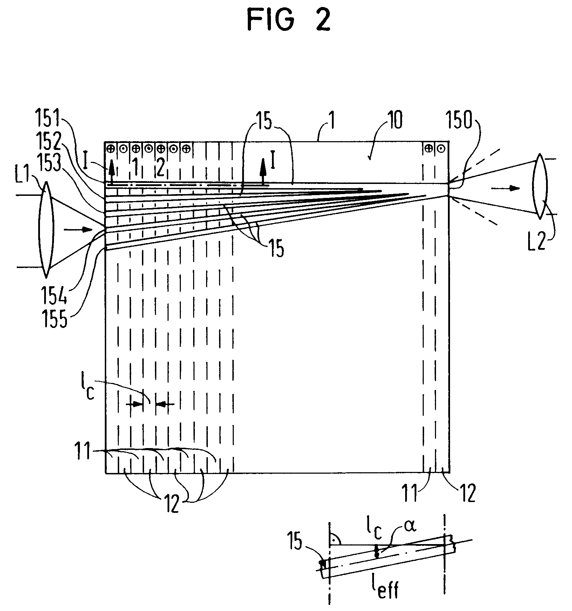

Das Substrat mit den entgegengesetzt gepolten Domänen 11 und 12 ist in der Figur 1d dargestellt. Dabei ist zusätzlich angenommen, daß der herzustellende optische Wellenleiter in Form eines dotierten Wellenleiters bei einer im Vergleich zu den beiden Curietemperaturen $T_c$, $T_{c1}$ sehr kleinen Temperatur hergestellt ist, beispielsweise durch Protonenaustausch und/oder Ionenimplantation. Ein solcher Wellenleiter ist in Figur 1d angedeutet, wobei angenommen ist, daß diese Figur einen Schnitt durch die Anordnung nach Figur 2 längs der Schnittlinie I-I darstellt. Die Dicke des Wellenleiters 15 ist mit t bezeichnet. Die streifenförmigen dotierten Bereiche 14 sollten eine Dicke haben, die mindestens gleich dieser Dicke t des Wellenleiters ist.

Beim Ausführungsbeispiel nach Figur 2 sind die periodisch abwechselnd gepolten Domänen 11 und 12 unmittelbar nebeneinander angeordnete parallele streifenförmige Bereiche der Oberfläche 10 des Substrats 1, die von einer Schar Streifenwellenleitern 15 unter verschiedenen Winkeln gekreuzt werden. Diese Streifenwellenleiter 15 sind auf der in der Figur links befindlichen Eingangsseite voneinander getrennt und laufen in Richtung nach rechts zusammen, und vereinigen sich auf der rechten Ausgangsseite. Die Breite $1_c$ der Domänen 11, 12 ist bei dieser Anordnung geringfügig kleiner als die Sollbreite gewählt. Durch Wahl des Einspeisungspunktes für das Primärlicht, d.h. durch Wahl eines der Wellenleiter 15, kann die für die gegebene Betriebstemperatur und Betriebswellenlänge geeignete effektive Domänenbreite $1_{eff}$ ausgewählt werden.

In der Figur 2 sind die Einspeisungspunkte für das Primärlicht mit 151 bis 155 bezeichnet, während der Austrittspunkt für das Primärlicht und das frequenzverdoppelte Licht mit 150 bezeichnet ist.

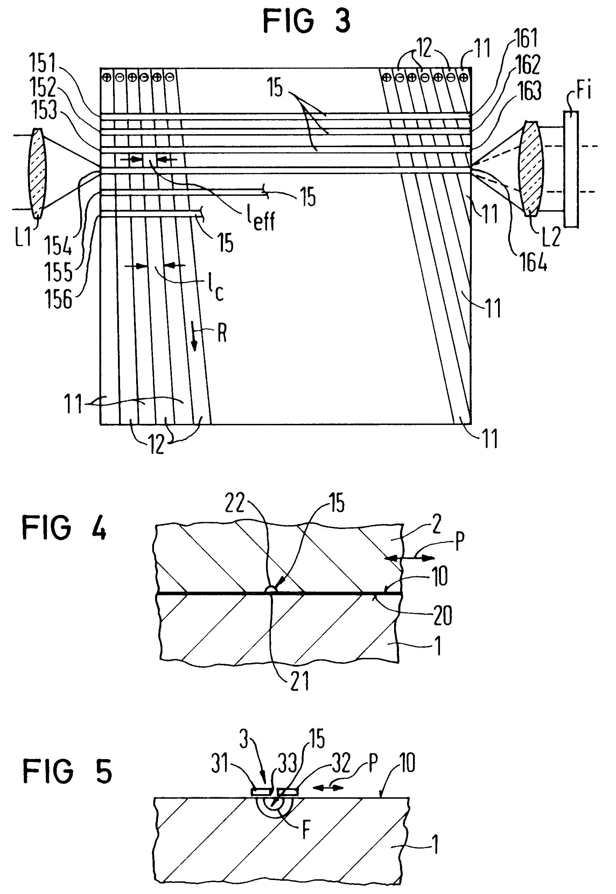

Die Anordnung nach Figur 3 unterscheidet sich von der Anordnung nach Figur 2 dadurch, daß die streifenförmigen Domänen 11 und 12 keine konstante Breite aufweisen, sondern sich in der Breite verändern, beispielsweise in der Richtung R kontinuierlich breiter werden und daß außerdem die diese streifenförmigen Domänen 11 und 12 kreuzenden Streifenwellenleiter 15 parallel zueinander angeordnet sind.

Ähnlich wie bei der Anordnung nach der Figur 2 sind auch bei der Anordnung nach Figur 3 den verschiedenen Einspeisungspunkten 151 bis 156 verschiedene Breiten $1_c$ der Domänen zugeordnet.

Ähnlich wie bei der Anordnung nach Figur 2 wird auch bei der Anordnung nach Figur 3 das Licht über eine Linse L1 in einen Einspeisungspunkt 151 bis 156 eingekoppelt und auf der anderen Seite aus einem zugeordneten Austrittspunkt 161 bis 164 über eine Linse L2 ausgekoppelt, wobei das frequenzverdoppelte Licht durch ein Filter Fi ausgefiltert werden kann.

Durch Wahl der Design-Parameter der einzelnen Streifenwellenleiter 15 (Querschnittsform, Brechzahlhub, Brechzahlprofil) kann deren Dispersionsverhalten beeinflußt werden, in der Weise, daß eine möglichst geringe Temperatur- und Spektralabhängigkeit des QPM-SHG-Prozesses bewirkt wird.

Verwendet man bei den Anordnungen nach den Figuren 2 und 3 einen verschwenkbaren bzw. parallel verschiebbaren Streifenwellenleiter, so ist keine fächerförmige oder parallele Schar von Streifenwellenleitern erforderlich, sondern es genügt ein einziger Streifenwellenleiter 15.

Die Figur 4 und 5 zeigen zwei Realisierungsmöglichkeiten eines solchen bewegbaren Streifenwellenleiters 15. Bei der Anordnung nach Figur 4 ist der optische Wellenleiter 15 in einer der Oberfläche 10 des Substrats 1 gegenüberliegenden Oberfläche 20 eines Körpers 2 ausgebildet, wobei Substrat 1 und Körper 2 relativ zueinander in Richtung des Doppelpfeils P bewegbar sind. Der Wellenleiter 15 selbst kann beispielsweise durch eine transparente Flüssigkeit 21 mit einer im Vergleich zu einer Brechzahl $n_1$ des Körpers 2 höheren Brechzahl $n_2$ in einer in der Oberfläche 20 des Körpers 2 ausgebildeten Nut 22 definiert sein.

Bei der Anordnung nach Figur 5 ist der optische Wellenleiter 15 durch eine gegenüber der Oberfläche 10 des aus elektrooptischem oder magnetooptischem Material bestehenden Substrats 1 angeordneten Vorrichtung 3 zur Erzeugung eines elektrischen oder magnetischen Feldes F im Substrat gebildet, wobei die Vorrichtung 3 und das Substrat 1 in Richtung des Doppelpfeiles P relativ zueinander bewegbar sind. Die Vorrichtung 3 zur Erzeugung des elektrischen oder magnetischen Feldes F kann zwei zueinander parallele streifenförmige, einen Spalt 33 zwischen sich freilassende Elektroden 31, 32 oder Magnetpole aufweisen. Das elektrische oder magnetische Feld F erzeugt eine lokale Brechzahlerhöhung des Substrats gegenüber der Umgebung, wodurch ein optischer Wellenleiter entsteht, der bei einer Verschiebung der Vorrichtung 3 relativ zum Substrat 1 mitbewegt wird.

**Patentansprüche**

1. Verfahren zur Herstellung einer optischen Wellenleiteranordnung mit in verschiedenen Richtungen (r1, r2) elektrisch gepolten Domänen (11, 12) für die optische Frequenzvervielfachung in einem Substrat (1) aus einem optisch nichtlinearem Material, wobei auf die Oberfläche (10) des homogen aus dem ferroelektrischen optisch nichtlinearen Material mit einer bestimmten Curie-Temperatur ($T_c$) bestehenden Substrats (1) eine Reihe von mit Abstand nebeneinander angeordneten Schichten (13) aus Dotiermaterial aufgebracht werden, daß unter diesen Schichten (13) durch Diffusion zumindest eines Dotierstoffes aus dem Dotiermaterial mit Abstand nebeneinander angeordnete dotierte Bereiche (14) im Substrat hergestellt werden, in denen sich eine von der Curie-Temperatur ($T_c$) des Substrats deutlich abweichende Curie-Temperatur ($T_{c1}$) einstellt, wobei das Substrat (1) mit den dotierten Bereichen (14) bei oder über der größeren der beiden voneinander abweichenden Curie-Temperaturen ($T_c$, $T_{c1}$) einem in einer bestimmten Richtung (r1 oder r2) ausgerichteten elektrischen Feld (E) und danach bei der kleineren der beiden Curie-Temperaturen ($T_c$, $T_{c1}$) einem in einer anderen Richtung (r2 bzw. r1) ausgerichteten elektrischen Feld (E) ausgesetzt wird, und wobei bei einer im Vergleich zu den beiden Curie-Temperaturen ($T_c$, $T_{c1}$) sehr kleinen Temperatur ein optischer Wellenleiter (15) derart nahe an den entgegengesetzt gepolten dotierten Bereichen (14) angeordnet wird, daß eine in diesem Wellenleiter (15) geführte optische Welle durch diese dotierten Bereiche (14) beeinflußt wird.

2. Verfahren nach Anspruch 1, **dadurch gekennzeichnet,** daß das Material des Substrats (1) aus der aus den Stoffen $LiNbO_3$, $BaTiO_4$ und $PbTiO_4$ bestehenden Gruppe ausgewählt ist.

3. Verfahren nach Anspruch 2, **dadurch gekennzeichnet,** daß das Material des Substrats (1) aus $LiNbO_3$ besteht.

4. Verfahren nach einem der vorhergehenden Ansprüche, **dadurch gekennzeichnet,** daß der oder die Dotierstoffe aus der Stoffgruppe der farblosen Ionenbildner ausgebildet ist oder sind.

5. Verfahren nach einem der vorhergehenden Ansprüche, **dadurch gekennzeichnet,** daß der oder die Dotierstoffe aus der aus den Stoffen Ti, Y, Zr, La, Mg, Ca, Sr, Ba und Lithium bestehenden Gruppe ausgewählt ist oder sind.

6. Verfahren nach einem der vorhergehenden Ansprüche, **dadurch gekennzeichnet,** daß der optische Wellenleiter (15) in Form eines dotierten Wellenleiters (siehe Anspruch 1 ...) im Substrat (1) hergestellt wird.

7. Verfahren nach Anspruch 6, **dadurch gekennzeichnet,** daß der dotierte optische Wellenleiter (15) durch Protonenaustausch und/oder Ionenimplantation hergestellt wird.

8. Verfahren nach einem der vorhergehenden Ansprüche, **dadurch gekennzeichnet,** daß durch Verwendung streifenförmiger Schichten (13) aus Dotiermaterial mit Abstand nebeneinander verlaufende streifenförmige dotierte Bereiche (14) im Substrat hergestellt werden.

9. Verfahren nach einem der vorhergehenden Ansprüche, **dadurch gekennzeichnet,** daß der optische Wellenleiter (15) in Form mindestens eines in Richtung der Reihe der dotierten Bereiche (14) im Substrat (1) verlaufenden Streifenwellenleiters hergestellt wird.

10. Verfahren nach Anspruch 8 und 9, **dadurch gekennzeichnet,** daß parallel nebeneinander verlaufende streifenförmige dotierte Bereiche (14) jeweils konstanter Breite ($1_c$) und mehrere, diese streifenförmigen Bereiche (14) unter verschiedenen Kreuzungswinkeln kreuzende Streifenwellenleiter (15) hergestellt werden.

11. Verfahren nach Anspruch 10, **dadurch gekennzeichnet,** daß die mehroren Streifenwellenleiter (15) zusammenlaufen und sich vereinigen.

12. Verfahren nach Anspruch 8 und 9, **dadurch gekennzeichnet,** daß streifenförmige dotierte Bereiche (14) mit in Längsrichtung (R) variierender Breite ($1_c$) und mehrere die streifenförmigen dotierten Bereiche (14) kreuzende Streifenwellenleiter (15) hergestellt werden.

13. Verfahren nach Anspruch 11, **dadurch gekennzeichnet,** daß die streifenförmigen dotierten Bereiche (14) sich in einer bestimmten Richtung (R) verbreitern.

14. Verfahren nach Anspruch 8 und 9, **dadurch gekennzeichnet,** daß parallel nebeneinander verlaufende streifenförmige dotierte Bereiche (14) gleichmäßiger Breite ($1_c$) und ein diese streifenförmigen Bereiche (14) kreuzender, relativ zum Substrat (1) verschwenkbarer Streifenwellenleiter (15) hergestellt werden.

15. Verfahren nach Anspruch 8 und 9, **dadurch gekennzeichnet,** daß streifenförmige dotierte Bereiche (14) mit in Längsrichtung (R) variierender Breite ($1_c$) und ein diese streifenförmigen Bereiche (14) kreuzender, relativ zum Substrat (1) parallel verschiebbarer Streifenwellenleiter (15) hergestellt werden.

16. Anordnung zur optischen Frequenzvervielfachung mit einem oder mehreren optischen Wellenleitern (15) mit abwechselnd in entgegengesetzten Richtungen (r1, r2) elektrisch gepolten Domänen (11, 12) auf einem Substrat (1), **dadurch gekennzeichnet,** daß die Domänen durch nebeneinander verlaufende streifenförmige Bereiche an der Oberfläche (10) des Substrats (1), in denen von streifenförmigem Bereich zu streifenförmigem Bereich das Material des Substrats (1) abwechselnd in entgegengesetzten Richtungen (r1, r2) gepolt ist, definiert sind, und daß der optische Wellenleiter (15) ein oder mehrere Streifenwellenleiter sind, welche die streifenförmigen Bereiche kreuzen.

17. Anordnung nach Anspruch 16, **dadurch gekennzeichnet,** daß die parallel zueinander verlaufenden streifenförmigen Bereiche (11, 12) konstante Breite ($1_c$) aufweisen und von mehreren Streifenwellenleitern (15) unter verschiedenen Winkeln gekreuzt werden.

18. Anordnung nach Anspruch 17, **dadurch gekennzeichnet,** daß die mehreren Streifenwellenleiter (15) zusammenlaufen und sich vereinigen.

19. Anordnung nach Anspruch 18, **dadurch gekennzeichnet,** daß die streifenförmigen Bereiche (11, 12) variierende Breite ($1_c$) aufweisen und von mehreren parallelen Streifenwellenleitern (15) gekreuzt werden.

20. Anordnung nach Anspruch 19, **dadurch gekennzeichnet,** daß die streifenförmigen Bereiche (11, 12) zusammen- oder auseinanderlaufen.

21. Anordnung nach Anspruch 16, **gekennzeichnet durch** einen relativ zum Substrat (1) bewegbaren Streifenwellenleiter (15).

22. Anordnung nach Anspruch 21, **dadurch gekennzeichnet,** daß die streifenförmigen dotierten Bereiche (14) parallel nebeneinander verlaufen und eine gleichmäßige Breite ($1_c$) aufweisen, und daß der bewegbare Streifenwellenleiter (15) relativ zum Substrat (1) verschwenkbar ist.

23. Anordnung nach Anspruch 21, **dadurch gekennzeichnet,** daß die streifenförmigen dotierten Bereiche (14) eine in Längsrichtung (R) variierende Breite ($1_c$) aufweisen, und daß der bewegbare Streifenwellenleiter (15) relativ zum Substrat (1) parallel verschiebbar ist.

24. Integriert optische Anordnung auf einem Substrat (1) mit einem relativ zum Substrat (1) bewegbaren optischen Wellenleiter (15), insbesondere Anordnung nach einem der Ansprüche 21 bis 23.

25. Anordnung nach Anspruch 24, **dadurch gekennzeichnet,** daß der optische Wellenleiter (15) in einer der Oberfläche (10) des Substrats (1) gegenüberliegenden Oberfläche (20) eines Körpers (2) ausgebildet ist, wobei Substrat (1) und Körper (2) relativ zueinander bewegbar sind.

26. Anordnung nach Anspruch 25, **dadurch gekennzeichnet,** daß der bewegbare optische Wellenleiter (15) durch eine transparente Flüssigkeit (21) mit einer im Vergleich zu einer Brechzahl ($n_1$) des Körpers (2) höheren Brechzahl ($n_2$) in einer in der Oberfläche (20) des Körpers (2) ausgebildeten Nut (22) definiert ist.

27. Anordnung nach Anspruch 24, **dadurch gekennzeichnet,** daß der bewegbare optische Wellenleiter (15) durch eine gegenüber der Oberfläche (10) des aus elektrooptischem oder magnetooptischem Material bestehenden Substrats (1) angeordneten Vorrichtung (3) zur Erzeugung eines elektrischen oder magnetischen Feldes (F) im Substrat (1) gebildet ist, wobei Vorrichtung (3) und Substrat (1) relativ zueinander bewegbar sind.

28. Anordnung nach Anspruch 27, **dadurch gekennzeichnet,** daß die Vorrichtung (3) zur Erzeugung des elektrischen oder magnetischen Feldes (F) zwei zueinander parallele streifenförmige, einen Spalt (33) zwischen sich freilassende Elektroden (31, 32) oder Magnetpole aufweist, parallel zur Oberfläche (10) des Substrats (1) verschiebbar sind.

# FIG 1

## FIG 1a

13  d  13  10  13

$T_c$  1

## FIG 1b

13  14  13  1c  13

$l_c$  $l_c$  $l_c$  14  1

$T_c$

## FIG 1c

11  14  f1 E  Max($T_c$,$T_{c1}$)  1c  14

14  14

P1  1

$T_c$

## FIG 1d

14  11  E  14 Min($T_c$,$T_{c1}$)  14  1c  15  14  12  14

t

P2  1

$T_c$

# FIG 2

# FIG 3

# FIG 4

# FIG 5